# EUROPÄISCHE PATENTSCHRIFT

(11) **EP 0 544 270 B1**
(45) Veröffentlichungstag und Bekanntmachung des Hinweises auf die Patenterteilung: **04.02.1998**
(21) Anmeldenummer: 92120121.6
(22) Anmeldetag: 25.11.1992
(51) Int. Cl.: A43B 7/12, A43B 9/16

(54) **Wasserdichtes, atmungsaktives Schuhwerk, sowie Verfahren zu dessen Herstellung**
Waterproof breathable shoe and method for manufacturing the same
Chaussure imperméable permettant la transpiration et procédé de fabrication de celle-ci

(30) Priorität: 26.11.1991 DE 4138836
(43) Veröffentlichungstag der Anmeldung: 02.06.1993
(73) Patentinhaber: W.L. Gore & Associates GmbH, 85636 Putzbrunn (DE)
(72) Erfinder: Bleimhofer, Walter, D-83104 Tuntenhausen (DE)
(74) Vertreter: Klunker . Schmitt-Nilson . Hirsch

(56) Entgegenhaltungen:
- WO-A-90/06067
- DE-A- 3 821 602
- DE-A- 4 004 674
- DE-C- 3 712 901
- US-A- 4 819 345

## Beschreibung

Die Erfindung betrifft ein wasserfestes, atmungsaktives Schuhwerk gemäß Oberbegriff des Anspruchs 1 und ein Verfahren zu dessen Herstellung.

Wasserdichtes, atmungsaktives Schuhwerk weist luftdurchlässiges und damit wasserdurchlässiges Obermaterial, beispielsweise aus Leder oder textilem Material, auf. Die Wasserdichtigkeit bei gleichzeitiger Wasserdampfdurchlässigkeit wird mit einem Futter-Laminat erreicht, das eine wasserdichte, wasserdampfdurchlässige Funktionsschicht aufweist, die auf der zum Obermaterial weisenden Seite mit einer textilen Abseite versehen sein kann und auf der von Obermaterial abliegenden Seite mit Futterstoff verbunden ist. Das untere Schaftende ist mit einer Brandsohle vernäht, beispielsweise mittels einer Strobelnaht. An die Brandsohle und das damit verbundene untere Schaftende ist eine Laufsohle aus Kunststoff so angespritzt, daß sowohl die Verbindungsnaht zwischen Brandsohle und Schaftende als auch das Schaftende selbst von dem Kunststoff der Laufsohle umschlossen und damit abgedichtet sind.

Zunächst hatte man die unteren Enden von Außenschaft und Innenschaft mittels einer einzigen Naht miteinander und mit der Brandsohle vernäht. Dem lag die Auffassung zugrunde, daß die Naht in dem von der Laufsohle wasserdicht umschlossenen Bereich liege und damit vor von außen eindringendem Wasser geschützt sei. Es hatte sich aber herausgestellt, daß bei derartigen Schuhen dann, wenn Wasser auf das Obermaterial gelangte, kurze Zeit später Feuchtigkeit in dem Futterstoff festzustellen war. Als Ursache hierfür stellte sich heraus, daß das für derartige Schuhe verwendete Obermaterial, sei es nun Leder oder Textilmaterial, Wasser nicht nur in seiner Quererstreckungsrichtung, sondern auch in seiner Längserstreckungsrichtung leitet. Dadurch kann Wasser, das von außen auf das Obermaterial gelangt, im Obermaterial und nach Übertragung vom Obermaterial auf die textile Abseite bzw. die Funktionsschicht des Futterlaminates im textilen Material der Abseite bis zu dem innerhalb der Laufsohle liegenden unteren Ende des Schaftes vordringen, von wo es mittels zweier Leitungsmechanismen zum Futterstoff des Innenschaftes gelangen kann. Einerseits gelangt Wasser, das im Obermaterial und in der textilen Abseite bzw. auf der Funktionsschicht bis hinab zu der den Außenschaft, den Innenschaft und die Brandsohle miteinander verbindenden Naht vorgedrungen ist, durch die durch die Naht in der Funktionsschicht erzeugten Nahtlöcher und durch die dochtartig wasserleitenden Nähfäden hindurch bis zum Futterstoff des Innenschaftes. Andererseits kommt es bei der Herstellung des Innenschaftes häufig vor, daß an der Schnittkante des unteren Innenschaftendes Textilfädchen der textilen Abseite und/oder des Futterstoffes um die Schnittkante der Funktionsschicht herum ragen und als Wasserbrücken vom Obermaterial bis zum Futterstoff wirken.

Da der Futterstoff üblicherweise aus Material mit starker Feuchtigkeitsaufsaugfähigkeit besteht, breitet sich durch diesen Wasserbrückenmechanismus zum Futterstoff gelangtes Wasser sehr rasch im Futterstoff aus. Es dauert meist nur etwa zehn Minuten nach dem Auftreffen von Wasser auf das Obermaterial, bis der Futterstoff feucht ist.

Die Wasserleitfähigkeit der textilen Abseite hat man zwar durch Verwendung monofilen Textilmaterials reduzieren, jedoch nicht ausschalten können.

In der DE-A-38 21 602 ist eine Abhilfe gegen den erwähnten Wasserbrückenmechanismus beschrieben. Dabei reicht das Obermaterial des Außenschaftes nicht bis zum unteren Ende des Innenschaftes hinab, sondern ist das untere Ende des Außenschaftes durch einen innerhalb der Laufsohle umlaufenden Verbindungsstreifen gebildet, dessen oberes Ende mit dem Obermaterial des Außenschaftes und dessen unteres Ende über eine Strobelnaht sowohl mit dem unteren Innenschaftende als auch mit der Brandsohle vernäht ist. Der Verbindungsstreifen besteht aus Netzband, beispielsweise aus einem mit monofilem Material gebildeten Netzband, das nicht wasserleitfähig ist. Wasser, das innerhalb des Obermaterials bis zu dessen Verbindungsnaht mit dem Netzband gelangt ist, kann nicht bis zu der Verbindungsnaht zwischen Netzband, Innenschaft und Brandsohle weiterkriechen. Hinzukommt, daß das Netzband beim Vorgang des Anspritzens der Laufsohle von flüssigem Kunststoff durchdrungen wird, der auf diese Weise bis zu dem hinter dem Netzband liegenden Bereich der textilen Abseite bzw. zu der Funktionsschicht gelangt. Dadurch wird das textile Material der Abseite verklebt und dessen Wasserleitfähigkeit unterbunden bzw. der innerhalb der angespritzten Laufsohle befindliche Bereich der Funktionsschicht abgedichtet.

Diese Maßnahmen haben sich als sehr wirksam für die Unterbindung von Wasserbrücken zwischen Obermaterial und Futterstoff erwiesen. Allerdings ist es erforderlich, ein Netzband mit einer Breite von mindestens 10 mm einzusetzen, damit rundum eine Mindesteinströmöffnung von 5 mm für den flüssigen Kunststoff der Laufsohle während des Anspritzvorgangs sichergestellt ist. Die restlichen 5 mm werden für Nahtüberhänge für das Vernähen des Neztbandes einen Endes mit dem Obermaterial und anderen Endes mit dem Innenschaft und der Brandsohle benötigt. Da die Nahtverbindung zwischen dem Netzband und dem Obermaterial am fertigen Schuh durch die angespritzte Laufsohle verdeckt sein muß, erfordert diese Technik eine Mindesttauchtiefe des Schaftes in der angespritzten Laufsohle von 14 mm. Dies führt zu einer entsprechenden Mindesthöhe des Laufsohlenrandes. Aus modischen Gründen werden nun aber auch Schuhe mit wesentlich dünneren angespritzten Laufsohlen verlangt.

Das für Schuhe der oben erläuterten Art verwendete Netzband besteht überlicherweise aus relativ steifem Material. Es ist daher schwierig, das Netzband ohne erhöhte Faltenbildung, insbesondere im Bereich der Schuhspitze, und damit ohne Verschlechterung der Paßform des Schuhs in den Bereich der Brandsohle zu modellieren.

Ähnliche Lösungen sind in der DE 38 40 087 A1 und in der DE 40 04 674 A1 beschrieben. In beiden Fällen ist das untere Ende des Außenschaftes nicht durch ein Netzband gebildet sondern durch ein folienartiges wasserdichtes Kunststoffband. Wasser, das über das Obermaterial des Außenschaftes in Richtung Brandsohle kriecht, kann über dieses Kunststoffband nicht weiterkriechen. Wasser, welches das Obermaterial des Außenschaftes durchdrungen hat und auf die Außenseite der Funktionsschicht gelangt ist, könnte jedoch an der Außenseite der Funktionsschicht herablaufen und zu der die Funktionsschicht durchsetzenden Brandsohlennaht und/oder zur unteren Schnittkante des die Funktionsschicht aufweisenden Innenfutters und auf diesem Weg zur Futterinnenseite gelangen. Um dies zu verhindern, ist in diesen beiden bekannten Fällen die Innenseite des Kunststoffbandes mit der Außenseite der Funktionsschicht verklebt, im Fall der DE 40 04 674 A1 durch Verwendung eines Klebebandes, im Fall der DE 38 40 087 A1 durch Anordnung eines Klebers zwischen Kunststoffband und Funktionsschicht.

Der Erfindung liegt die Aufgabe zugrunde, Abhilfe der genannten Probleme zu schaffen, d.h. die Paßform des Schuhes zu verbessern und das Anspritzen einer dünneren Laufsohle zu ermöglichen.

Diese Aufgabe wird mit einem Schuh der im Patentanspruch 1 angegebenen Art gelöst, der sich mit einem Verfahren herstellen läßt, wie es in Anspruch 9 angegeben ist.

Gegenüber den aus den genannten Druckschriften bekannten Schuhaufbauten ist bei der erfindungsgemäßen Lösung das den unteren Endbereich des Außenschaftes bildende Netz- oder Kunststoffband weggelassen. Das untere Ende des gegenüber dem unteren Innenschaftende verkürzten Außenschaftes ist mittels einer Klebenaht am Innenschaft festgeheftet.

Durch diese Abweichungen gegenüber dem Schuhwerk bekannter Art ist die Unterbindung von Wasserbrücken vom Obermaterial zum Futterstoff nicht nur aufrechterhalten, sondern verbessert worden. Bei dem erfindungsgemäßen Aufbau besteht am unteren Schaftende gar keine Verbindung zwischen Außenschaft und Innenschaft, noch nicht einmal über ein Netzband oder Kunststoffband. Bei dem erfindungsgemäßen Schuhwerk ist das untere Obermaterialende gleichzeitig das untere Außenschaftende. Da dieses kürzer ist als das Innenschaftende und es damit in einem Abstand vom Innenschaftende endet, kann das beim Anspritzen der Laufsohle flüssige Kunststoffmaterial noch ungehinderter als durch ein Netzband hindurch zu dem Innenschaft gelangen. Dies führt aufgrund des Druckes, mittels welchem der Laufsohlen-Kunststoff angespritzt wird, zu einer noch vollständigeren Verklebung des textilen Materials der Abseite und damit zu einer noch wirksameren Feuchtigkeitssperre als bei dem bekannten Schuhwerk mit Netzband oder Kunststoffband. Feuchtigkeit, die von naß gewordenem Obermaterial auf die gegenüberliegende textile Abseite des Innenschaftes gelangt, hat noch weniger Möglichkeit, über die textile Abseite hinab zu kriechen und über die Verbindungsnaht zwischen Innenschaft und Brandsohle zum Futterstoff zu gelangen. Für den Fall, daß eine textile Abseite vorhanden ist, führt dies zu einer vollständigen Abdichtung desjenigen Bereichs der Funktionsschicht, der sich innerhalb der angespritzten Laufsohle befindet.

Bei dem erfindungsgemäßen Verfahren kann man mit der Mindesttauchtiefe des Schaftes in der angespritzten Laufsohle bis auf 4 mm herabgehen, mit entsprechender Verringerung der Laufsohlenhöhe. Außerdem führt die erfindungsgemäße Methode zu erheblicher Kosteneinsparung gegenüber dem bekannten Schuhwerk. Man spart einerseits die Materialkosten des Netzbandes bzw. Kunststoffbandes ein. Andererseits erspart man sich dessen zweimaliges Vernähen. Das Verkleben des unteren Außenschaftendes mit dem Innenschaft ist wesentlich weniger aufwendig als das Vernähen des unteren Obermaterialendes mit einem Netzband.

Durch das Verkleben des unteren Außenschaftendes mit dem Innenschaft wird außerdem das Risiko einer Verletzung der Funktionsschicht des Innenschaftes erheblich verringert. Bei der bekannten Methode mit Netz- der Kunststoffband können an der Verbindungsnaht zwischen Obermaterial und Netz- bzw. Kunststoffband auf die Funktionsschicht einwirkende Druckspitzen auftreten, und zwar sowohl während des Anspritzens der Laufsohle als auch während der Gehbewegungen beim Benutzen des Schuhwerks, die zu einer Beschädigung der Funktionsschicht führen können. Da Klebestreifen, beispielsweise Klebstoffraupen, wie man sie bei dem erfindungsgemäßen Schuhwerk zum Verkleben von Außenschaft und Innenschaft verwendet, wesentlich großflächiger sind als Nähnähte, ist bei erfindungsgemäßem Schuhwerk das Auftreten solcher Druckspitzen und das damit einhergehende Risiko der Beschädigung der Funktionsschicht vermieden.

Das untere Außenschaftende ist vorzugsweise etwa 5 mm kürzer als das untere Innenschaftende. Die Verbindung zwischen Brandsohle und Innenschaft wird vorzugsweise durch Vernähen, insbesondere mittels einer Strobelnaht, erreicht. Als Klebstoff für das Verkleben des Außenschaftes mit dem Innenschaft kann ein Schmelzklebstoff auf Polyurethanbasis verwendet werden, vorzugsweise in Form einer Klebstoffraupe.

Man kann das untere Ende sowohl des Außenschaftes als auch des Innenschaftes im wesentlichen senkrecht zur Laufsohle auslaufen lassen, wobei das untere Innenschaftende über das untere Außenschaftende nach unten übersteht und in etwa senkrechter Ausrichtung zur Brandsohle mit dieser vernäht ist.

Man kann aber auch den über das untere Außenschaftende hinausreichenden Innenschaftbereich vom unteren Außenschaftende im wesentlichen rechtwinklig zur Schuhmitte hin gerichtet abwinkeln, den Brandsohlenumfang entsprechend der abgewinkelten Länge des Innenschaftendes zur Schuhmitte hin gerichtet zurücksetzen und den abgewinkelten Innenschaftbereich in im wesentlich koplanarer Ausrichtung zur Brandsohle mit dieser vernähen. Bei letzterer Ausführungsform der Erfindung kann man zu einer besonders geringen Dicke der angespritzten Laufsohle kommen.

Die Erfindung wird nun anhand von Ausführungformen näher erläutert. In den Zeichnungen zeigen:
- **Fig. 1**: eine erste Ausführungsform der Erfindung;
- **Fig. 2**: ein Zwischenstadium bei der Herstellung von erfindungsgemäßem Schuhwerk; und
- **Fig. 3**: eine zweite Ausführungsform der Erfindung.

Beide Figuren zeigen je eine ausschnittsweise schematische Querschnittsansicht eines erfindungsgemäß aufgebauten Schuhs.

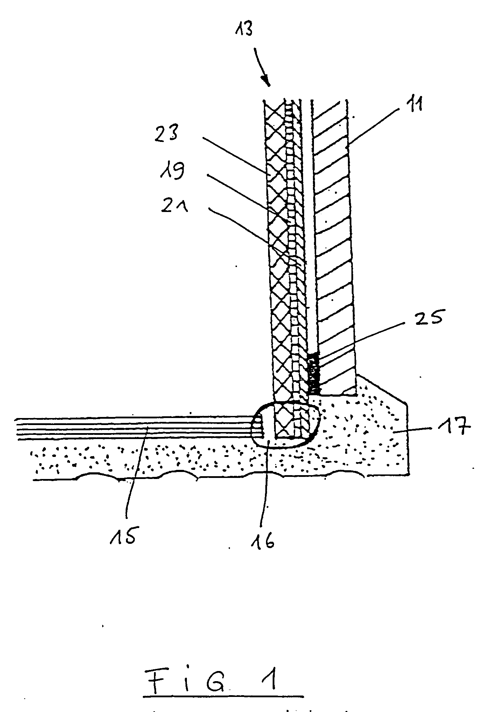

**Fig. 1** zeigt in schematischer Querschnittsdarstellung den Bereich eines Schuhwerks, in dem ein Außenschaft 11, ein Innenschaft 13, eine Brandsohle 15 und eine angespritzte Laufsohle 17 aneinanderstoßen. Der Außenschaft 11 besteht aus einem Obermaterial wie Leder oder Textilmaterial. Der Innenschaft 13 besteht z.B. aus einem dreilagigen Laminat mit einer Funktionsschicht 19 in der Mitte, einer textilen Abseite 21 auf der zum Außenschaft 11 weisenden Seite und einem Futterstoff 23 auf der vom Außenschaft 11 abliegenden Seite. Die Funktionsschicht 19 besteht aus einem wasserdichten, wasserdampfdurchlässigen Material.

Der Innenschaft kann auch aus einem zweilagigen Laminat mit einer Funktionsschicht auf der zum Außenschaft 11 weisenden Seite und einem Futterstoff auf der anderen Seite bestehen.

Für die Funktionsschicht geeignete Materialien umfassen mikroporöses gerecktes Polytetrafluorethylen (PFTE), wie es in den US-Patentschriften 3,953,566 und 4,187,390 beschrieben ist; gerecktes PTFE, das mit hydrophilen Imprägniermitteln und/oder Schichten versehen ist, wie es in der US-Patentschrift 4,194,041 beschrieben ist; atmungsfähige Poylurethanschichten; oder Elastomere, wie Copolyetherester und deren Laminate, wie es in den US-Patentschriften 4,725,481 und 4,493,870 beschrieben ist.

Die Brandsohle 15 und die Laufsohle 17 bestehen aus einem der üblichen Materialien, beispielsweise Leder oder Vlies bzw. Polyurethan.

Erfindungsgemäß ist das untere Ende des Innenschaftes 13 länger als das untere Ende des Außenschaftes 11. Bevorzugt wird eine Längendifferenz von etwa 5 mm. Das untere Ende sowohl des Innenschaftes 13 als auch des Außenschaftes 11 laufen senkrecht zur Laufsohle 17 aus. Das untere Ende des Innenschaftes 13 ist mit dem Umfangsrand der Brandsohle 15 über eine (in der Zeichnung nur angedeutet dargestellte) Strobelnaht 16 verbunden. Das untere Ende des Außenschaftes 11 ist mit dem Innenschaft 13 mittels einer Klebstoffschicht 25 verbunden. Die Laufsohle 17 ist mit einer solchen Dicke angespritzt, daß sie das untere Ende des Außenschaftes 11 einbettet.

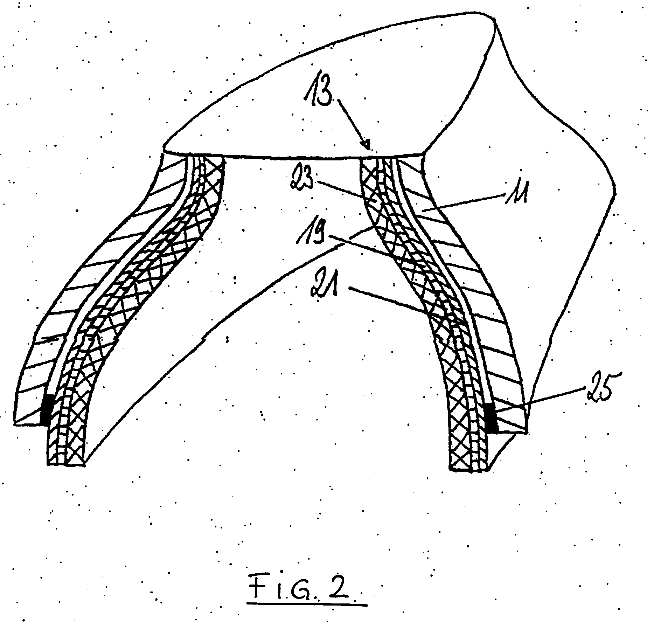

Zur Herstellung von Schuhwerk gemäß **Fig. 1** werden zunächst der Außenschaft 11 und der Innenschaft 13 hergestellt, derart, daß am unteren Ende der Innenschaft 13 etwa 5 mm länger ist als der Außenschaft 11. Danach werden der Außenschaft 11 und der Innenschaft 13 an ihrem eine Fußeinschlüpföffnung bildenden oberen Ende miteinander vernäht. Danach steht am unteren Ende der Innenschaft 13 die gewünschten 5 mm über den Außenschaft 11 über. Auf den Innenrand des unteren Endes des Außenschaftes 11 oder alternativ im Abstand von 5 mm vom unteren Innenschaftende wird auf die Außenseite des Innenschaftes 13 ein Schmelzklebstoff, vorzugsweise in Form einer etwa 2 bis 3 mm breiten Klebstoffraupe, aufgebracht. Je nach Art des verwendeten Klebstoffs erfolgt kurze Zeit danach das Anpressen des unteren Endes des Außenschaftes 11 an den Innenschaft 13, wenn ein nach seinem Auftrag klebefähiger Klebstoff verwendet wird. Das Verkleben kann aber auch zu beliebig späterer Zeit erfolgen, wenn ein Klebstoff verwendet wird, der nach dem Auftragen erst durch eine Aktivierung, insbesondere Hitzeaktivierung, in klebfähigen Zustand gebracht wird. Nach diesen Herstellungsschritten ist ein Verbund aus Außenschaft 11 und Innenschaft 13 geschaffen, wie er in **Fig. 2** schematisch dargestellt ist.

Nach dem Verkleben von Außenschaft 11 und Innenschaft 13 erfolgt das Vernähen der Brandsohle mit dem über den Außenschaft 11 nach unten überstehenden Ende des Innenschaftes 13. Hierzu wird vorzugsweise eine Strobelnaht oder eine Steppnaht verwendet. Der Verbund aus Außenschaft 11, Innenschaft 13 und Brandsohle 15 wird dann auf einen Leisten aufgezogen und danach wird die Laufsohle 17 angespritzt.

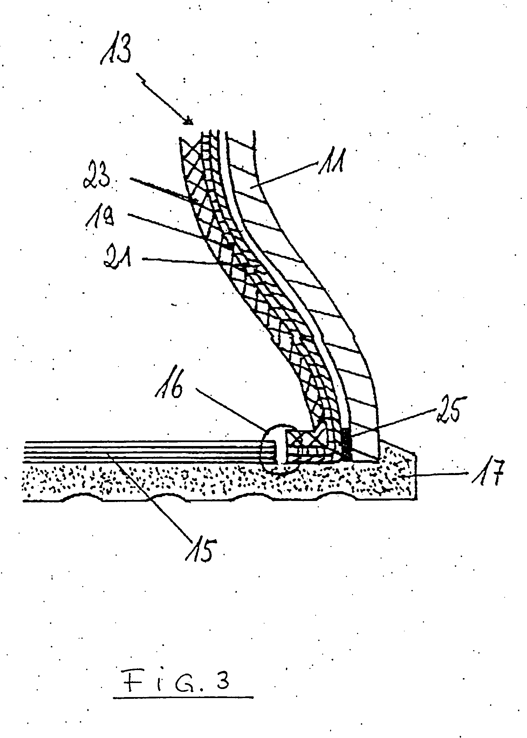

**Fig. 3**, für welche die gleichen Bezugszeichen wie in **Fig. 1** verwendet werden, zeigt eine ausschnittsweise Querschnittsdarstellung einer zweiten Ausführungsform der Erfindung, die sich hinsichtlich der Erstreckungsrichtung des über das untere Außenschaftende hinausragenden unteren Innenschaftendes von der in **Fig. 1** gezeigten ersten Ausführungsform unterscheidet. Dabei ist dieses untere Innenschaftsende in etwa rechtwinklig vom unteren Außenschaftsende in Richtung zur Schuhmitte weggebogen, unter gleichzeitiger Rücksetzung des Brandsohlenumfangsrandes in Richtung zur Schuhmitte hin um einen entsprechenden Betrag. Das abgewinkelte untere Innenschaftsende wird bei dieser Ausführungsform in im wesentlichen koplanarer Ausrichtung zur Brandsohle 15 mit dem Umfangsrand der Brandsohle 15 vernäht. Bei dieser Ausführungsform kann die Höhe der Laufsohle 17 um denjenigen Betrag kleiner als bei der ersten Ausführungsform nach **Fig. 1** gemacht werden, um welchen bei der ersten Ausführungsform der untere Rand des Außenschaftes höher liegt als die Brandsohlen 15.

Zur Herstellung der zweiten Ausführungsform wird wie bei der ersten Ausführungsform vorgegangen, mit der Abweichung, daß eine kleinere Brandsohle 15 zugeschnitten wird, daß das über das untere Außenschaftende nach unten überstehende Innenschaftende im von dem unteren Außenschaftende weggebogenem Zustand mit dem Brandsohlenumfang vernäht wird und daß eine niedrigere Anspritzform für die Laufsohle verwendet wird.

In den Zeichnungen ist die Naht 16 nur schematisch angedeutet. Handelt es sich um eine Strobelnaht, sind Brandsohlenrand und Innenschaftende in etwa V-förmig aneinandergenäht. Bei den vorausgehenden Richtungs- und Erstreckungsangaben von Außenschaft- und Innenschaftende ist dies nicht berücksichtigt.

## Patentansprüche

1. Wasserdichtes, atmungsaktives Schuhwerk
- mit einem Schaft (11, 13), dessen unteres Schaftende mit einer Brandsohle (15) verbunden ist,
- wobei der Schaft (11, 13) einen mit Obermaterial gebildeten Außenschaft (11) und einen mit Futtermaterial gebildeten Innenschaft (13) aufweist und das Futtermaterial mit einer wasserdichten, wasserdampfdurchlässigen Funktionsschicht (19) versehen ist,
- und mit einer Laufsohle (17) aus Kunststoff, die derart an die Brandsohle (15) und den Schaft (11, 13) angespritzt ist, daß sie das untere Ende des Außenschaftes (11) und des Innenschaftes (13) umschließt, wobei das untere Innenschaftende vom unteren Außenschaftende zur Brandsohle (15) hin vorsteht und das untere Außenschaftende mit dem Innenschaft (13) verklebt ist,
**dadurch gekennzeichnet,**
- daß die Brandsohle (15) nur mit dem Innenschaftende verbunden ist,
- und daß die Laufsohle (17) an das von dem unteren Außenschaftende vorstehende untere Innenschaftende unmittelbar angespritzt ist, derart, daß für das untere Außenschaftende eine Verbindung sowohl mit dem unteren Innenschaftende als auch mit der Brandsohle (15) nur über Laufsohlenmaterial besteht.

2. Schuhwerk nach Anspruch 1,
**dadurch gekennzeichnet,**
daß die Brandsohle (15) und der Innenschaft (13) miteinander vernäht sind.

3. Schuhwerk nach Anspruch 2,
**dadurch gekennzeichnet,**
daß die Brandsohle (15) und der Innenschaft (13) mittels einer Strobelnaht miteinander vernäht sind.

4. Schuhwerk nach einem der Ansprüche 1 bis 3,
**dadurch gekennzeichnet,**
daß das untere Innenschaftende etwa 5 mm vom unteren Außenschaftende vorsteht.

5. Schuhwerk nach einem der Ansprüche 1 bis 4,
**dadurch gekennzeichnet,**
daß der Außenschaft (11) und der Innenschaft (13) mittels einer Klebstoffschicht (25) auf Polyurethanbasis verklebt sind.

6. Schuhwerk nach einem der Ansprüche 1 bis 5,
**dadurch gekennzeichnet,**
- daß sich das untere Außenschaftende senkrecht zur Laufsohle (17) erstreckt, und
- daß das untere Innenschaftende in der Erstreckungsrichtung des unteren Außenschaftendes über das untere Außenschaftende herabreicht.

7. Schuhwerk nach einem der Ansprüche 1 bis 5,
**dadurch gekennzeichnet,**
- daß sich das untere Außenschaftende senkrecht zur Laufsohle (17) erstreckt,
- daß der Brandsohlenumfang gegenüber dem unteren Schaftende zur Schuhmitte hin zurückgesetzt ist, und
- daß der über das untere Außenschaftende vorstehende Bereich des unteren Innenschaftendes vom unteren Außenschaftende zum Brandsohlenumfang hin abgewinkelt ist.

8. Schuhwerk nach Anspruch 7,
**dadurch gekennzeichnet,**
daß das untere Außenschaftende im wesentlichen in der Ebene der Brandsohlenunterseite endet.

9. Verfahren zur Herstellung von Schuhwerk nach einem der Ansprüche 1 bis 8, bei dem
- ein mit Obermaterial gebildeter Außenschaft (11) und ein einen Futterstoff (23) und eine wasserdichte, wasserdampfdurchlässige Funktionsschicht (19) aufweisender Innenschaft (13), der an dem im Laufsohlenbereich befindlichen unteren Ende länger ist als der Außenschaft (11), hergestellt werden;
- der Außenschaft und der Innenschaft (13) an ihren eine Fußeinschlüpföffnung bildenden oberen Ende derart miteinander verbunden werden, daß das untere Innenschaftende über das untere Außenschaftende übersteht,
- auf das untere Außenschaftende auf der zum Innenschaft weisenden Seite und/oder auf die Außenseite des Innenschaftes (13) auf der Höhe des unteren Außenschaftendes eine rund um das untere Außenschaftende bzw. den Innenschaft (13) umlaufende Klebstoffschicht (25) aufgebracht wird und damit der Außenschaft (11) und der Innenschaft (13) miteinander verklebt werden,
- danach die Brandsohle (15) mit dem unteren Ende des Innenschaftes (13) verbunden wird, und
- schließlich eine Laufsohle (17) an die Brandsohle (15) und die unteren Enden von Außenschaft (11) und Innenschaft (13) so angespritzt wird, daß die unteren Enden von Außenschaft (11) und Innenschaft (13) von der Laufsohle (17) eingeschlossen werden und die Laufsohle unmittelbar an das von dem unteren Außenschaftende vorstehende untere Innenschaftende angespritzt wird, derart, daß für das untere Außenschaftende eine Verbindung sowohl mit dem unteren Innenschaftende als auch mit der Brandsohle (15) nur über Laufsohlenmaterial entsteht.

10. Verfahren nach Anspruch 9,
**dadurch gekennzeichnet,**
daß ein nach Auftrag klebefähiger Kleber verwendet wird.

11. Verfahren nach Anspruch 9,
**dadurch gekennzeichnet,**
daß ein Kleber aufgetragen wird, der zum Verlieben durch Hitzeaktivierung in klebfähigen Zustand gebracht wird.

## Claims

1. Waterproof breathable footwear
- comprising an upper (11, 13) having its lower upper end connected to an insole (15),
- said upper (11, 13) having an outside upper (11) formed with outside material and an inside upper (13) formed with lining material and said lining material being provided with a waterproof, water-vapour permeable functional layer (19), and
- comprising an outsole (17) of plastics material injection-moulded to the insole (15) and the upper (11, 13) such that it encloses the lower end of the outside upper (11) and of the inside upper (13), with the lower inside upper end projecting from the lower outside upper end towards the insole (15) and the lower outside upper end being adhered to the inside upper (13),
characterized in
- that the insole (15) is connected only to the inside upper end,
- and that the outsole (17) is directly injection-moulded to the lower inside upper end projecting from the lower outside upper end, such that a connection of the lower outside upper end both to the lower inside upper end and to the insole (15) exists only via outsole material.

2. The footwear of claim 1,
characterized in that the insole (15) and the inside upper (13) are sewn to each other.

3. The footwear of claim 2,
characterized in that the insole (15) and the inside upper (13) are sewn to each other by means of a butt-to-butt seam.

4. The footwear of any of claims 1 to 3,
characterized in that the lower inside upper end projects beyond the lower outside upper end by approx. 5 mm.

5. The footwear of any of claims 1 to 4,
characterized in that the outside upper (11) and the inside upper (13) are adhered to each other by means of a polyurethane-based adhesive layer (25).

6. The footwear of any of claims 1 to 5,
characterized in
- that the lower outside upper end extends perpendicularly to the outsole (17), and
- that the lower inside upper end extends down beyond the lower outside upper end in the direction of extension of the lower outside upper end.

7. The footwear of any of claims 1 to 5,
characterized in
- that the lower outside upper end extends perpendicularly to the outsole (17),
- that the insole periphery is set back with respect to the lower upper end towards the shoe centre, and
- that the portion of the lower inside upper end projecting beyond the lower outside upper end is angled from the outside upper end towards the insole periphery.

8. The footwear of claim 7,
characterized in that the lower outside upper end terminates substantially in the plane of the insole bottom side.

9. A method of making footwear according to any of claims 1 to 8, wherein
- an outside upper (11) formed with outside material and an inside upper (13) having a lining material (13) and a waterproof, water-vapour permeable functional layer (19) are manufactured, said inside upper (13) being longer than the outside upper (11) at the lower end located in the outsole region;
- the outside upper and the inside upper (13) are connected at their top end forming a foot entrance opening, such that the lower inside upper end projects beyond the lower outside upper end,
- the lower outside upper end, on the side facing towards the inside upper, and/or the outside of the inside upper (13) are provided, at the height of the lower outside upper end, with an adhesive layer (25) extending all around the lower outside upper end and the inside upper (13), respectively, with the outside upper (11) and the inside upper (13) being thus adhered to each other,
- thereafter the insole (15) is connected to the lower end of the inside upper (13), and
- finally an outsole (17) is injection-moulded to the insole (15) and the lower ends of outside upper (11) and inside upper (13) such that the lower ends of outside upper (11) and inside upper (13) are enclosed by the outsole (17) and the outsole is directly injection-moulded to the lower inside upper end projecting from the lower outside upper end, such that a connection of the lower outside upper end both to the lower inside upper end and to the insole (15) is created only via outsole material.

10. The method of claim 9,
characterized in that an adhesive is used having adhesive properties upon application thereof.

11. The method of claim 9,
characterized in that an adhesive is applied which for adhering is brought into an adhesive state by heat activation.

## Revendications

1. Chaussure étanche à l'eau, à respiration active
- comprenant une tige (11, 13) dont l'extrémité inférieure est assemblée à une première (15),
- dans laquelle la tige (11, 13) présente une tige extérieure (11) formée avec une matière supérieure et une tige intérieure (13) formée avec une matière de doublure, et la matière de doublure est munie d'une couche fonctionnelle (19) étanche à l'eau et perméable à la vapeur d'eau,
- et comprenant une semelle (17) en matière synthétique qui est moulée contre la première (15) et la tige (11, 13) de manière à entourer l'extrémité inférieure de la tige extérieure (11) et de la tige intérieure (13), l'extrémité inférieure de la tige intérieure se prolongeant au-delà de l'extrémité inférieure de la tige extérieure jusqu'à la première (15) et l'extrémité inférieure de la tige extérieure étant assemblée à la tige intérieure (13) par collage,
caractérisée
- en ce que la première (15) n'est assemblée qu'à l'extrémité de la tige intérieure,
- et en ce que la semelle (17) est moulée directement contre l'extrémité inférieure de la tige intérieure qui se prolonge au-delà de l'extrémité inférieure de la tige extérieure de telle manière que, pour l'extrémité inférieure de la tige extérieure, il n'existe un assemblage, aussi bien avec l'extrémité inférieure de la tige intérieure qu'avec la première (15), que par l'intermédiaire de la matière de la semelle.

2. Chaussure selon la revendication 1,
caractérisée
en ce que la première (15) et la tige intérieure (13) sont cousues ensemble.

3. Chaussure selon la revendication 2,
caractérisée
en ce que la première (15) et la tige intérieure (13) sont cousues ensemble au moyen d'une couture Strobel.

4. Chaussure selon une des revendications 1 à 3,
caractérisée
en ce que l'extrémité inférieure de la tige intérieure se prolonge d'environ 5 mm au-delà de l'extrémité inférieure de la tige extérieure.

5. Chaussure selon une des revendications 1 à 4,
caractérisée
en ce que la tige extérieure (11) et la tige intérieure (13) sont assemblées par collage au moyen d'une couche de colle (25) à base de polyuréthane.

6. Chaussure selon une des revendications 1 à 5,
caractérisée
- en ce que l'extrémité inférieure de la tige extérieure s'étend perpendiculairement à la semelle (17) et
- en ce que l'extrémité inférieure de la tige intérieure se prolonge au-delà de l'extrémité inférieure de la tige extérieure selon la direction de l'extension de l'extrémité inférieure de la tige extérieure.

7. Chaussure selon une des revendications 1 à 5,
caractérisée
- en ce que l'extrémité inférieure de la tige extérieure s'étend perpendiculairement à la semelle (17),
- en ce que la périphérie de la première est en retrait vers le milieu de la chaussure par rapport à l'extrémité inférieure de la tige, et
- en ce que la région de l'extrémité inférieure de la tige intérieure qui se prolonge au-delà de l'extrémité inférieure de la tige extérieure est coudée vers la périphérie de la première en partant de l'extrémité inférieure de la tige extérieure.

8. Chaussure selon la revendication 7,
caractérisée
en ce que l'extrémité inférieure de la tige extérieure se termine sensiblement dans le plan de la face inférieure de la première.

9. Procédé de fabrication d'une chaussure selon une des revendications 1 à 8, dans laquelle
- on fabrique une tige extérieure (11) formée avec une matière supérieure et une tige intérieure (13) qui présente une matière de doublure (23) et une couche fonctionnelle (19) étanche à l'eau et perméable à la vapeur d'eau et qui, à l'extrémité inférieure qui se trouve dans la région de la semelle, est plus longue que la tige extérieure (11) ;
- la tige extérieure e( la tige intérieure (13) sont assemblées l'une à l'autre, à leur extrémité supérieure qui forme une ouverture pour enfiler le pied, de telle manière que l'extrémité inférieure de la tige intérieure se prolonge au-delà de l'extrémité inférieure de la tige extérieure,
- on dépose sur l'extrémité inférieure de la tige extérieure, sur sa face dirigée vers la tige intérieure, et/ou sur la face extérieure de la tige intérieure (13), à la hauteur de l'extrémité inférieure de la tige extérieure, une couche de colle (25) qui s'étend sur tout le tour de l'extrémité inférieure de la tige extérieure et de la tige intérieure (13) et on assemble ainsi la tige extérieure (11) et la tige intérieure (13) l'une à l'autre par collage,
- ensuite, on assemble la première (15) avec l'extrémité inférieure de la tige intérieure (13), et
- finalement, on moule une semelle (17) contre la première (15) et contre les extrémités inférieures de la tige extérieure (11) et la tige intérieure (13) de telle manière que les extrémités inférieures de la tige extérieure (11) et de la tige intérieure (13) soient entourées par la semelle (17), et que la semelle soit moulée directement contre l'extrémité inférieure de la tige intérieure qui se prolonge au-delà de l'extrémité inférieure de la tige extérieure, de sorte que, pour la extrémité inférieure de la tige extérieure, il n'existe un assemblage, aussi bien avec l'extrémité inférieure de la tige intérieure qu'avec la première (15), que par l'intermédiaire de la matière de la semelle.

10. Procédé selon la revendication 9,
caractérisé
en ce qu'on utilise une colle qui est capable de coller après son application.

11. Procédé selon la revendication 9,
caractérisé
en ce qu'on applique une colle qui, pour l'assemblage par collage, est mise dans un état capable de coller par activation par la chaleur.
